(19) Europäisches Patentamt
European Patent Office
Office européen des brevets

(11) **EP 3 707 800 B1**

(12) **FASCICULE DE BREVET EUROPEEN**

(45) Date de publication et mention
de la délivrance du brevet:
**01.09.2021 Bulletin 2021/35**

(21) Numéro de dépôt: **18786822.9**

(22) Date de dépôt: **23.10.2018**

(51) Int Cl.:
*B60L 53/22* (2019.01)      *H02M 1/42* (2007.01)
*H02M 7/219* (2006.01)      *H02M 1/10* (2006.01)
*H02J 7/02* (2016.01)

(86) Numéro de dépôt international:
**PCT/EP2018/079044**

(87) Numéro de publication internationale:
**WO 2019/091776 (16.05.2019 Gazette 2019/20)**

(54) **PROCÉDÉ DE COMMANDE D'UN CHARGEUR DE BATTERIE D'ACCUMULATEURS ÉLECTRIQUES**

VERFAHREN ZUR STEUERUNG EINES BATTERIELADEGERÄTES FÜR ELEKTRISCHE AKKUMULATOREN

METHOD FOR CONTROLLING A BATTERY CHARGER FOR ELECTRICAL ACCUMULATORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2017 FR 1760520**

(43) Date de publication de la demande:
**16.09.2020 Bulletin 2020/38**

(73) Titulaire: **RENAULT s.a.s.**
**92100 Boulogne-Billancourt (FR)**

(72) Inventeurs:
• **MERIENNE, Ludovic**
**91190 Gif-sur-Yvette (FR)**
• **KVIESKA, Pedro**
**78000 Versailles (FR)**

(74) Mandataire: **Urbillac, Chantal Corinne Annie RENAULT s.a.s.**
**Sce 00267 - TCR GRA 2 36**
**1 avenue du Golf**
**78084 Guyancourt Cedex (FR)**

(56) Documents cités:
**WO-A2-2013/093287      US-A1- 2017 279 287**

• **IDE P ET AL: "Operation of a three-phase/three-level-rectifier in wide range and single-phase applications", INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, vol. 2, 29 novembre 1999 (1999-11-29), pages 577-582, XP010366681, DOI: 10.1109/IECON.1999.816448 ISBN: 978-0-7803-5735-8**

EP 3 707 800 B1

**Description**

La présente invention concerne un procédé de commande d'un chargeur de batterie d'accumulateurs électriques, et plus précisément un procédé de commande d'un redresseur triphasé pour un dispositif de charge à entrée monophasée, comprenant un convertisseur AC-DC (courant alternatif-courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

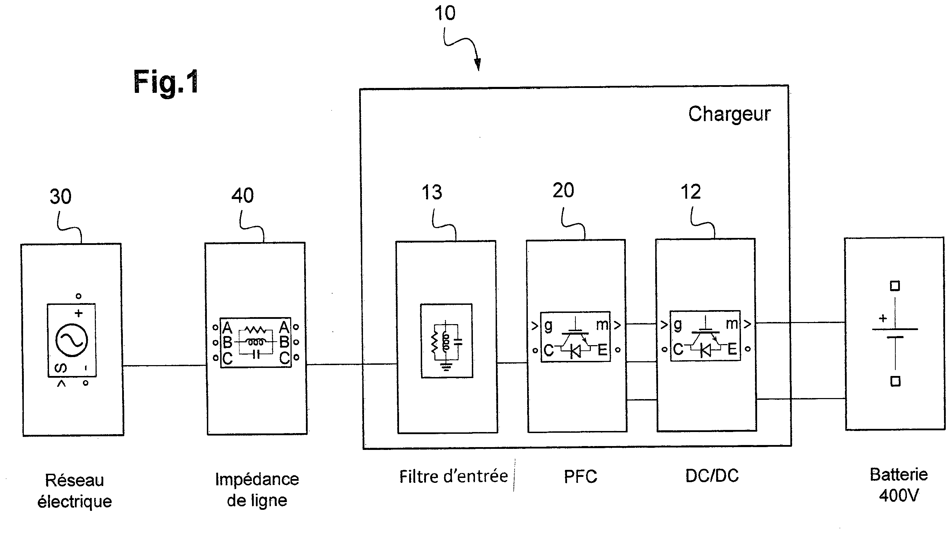

On se place ici dans le domaine des dispositifs de charge à entrée monophasée. La figure 1 illustre une topologie connue d'un dispositif de charge 10 isolé, embarqué sur un véhicule électrique ou hybride pour la recharge de la batterie haute tension du véhicule à partir du réseau électrique monophasé 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier convertisseur AC-DC, qui comporte un circuit correcteur de facteur de puissance 20 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 20 par rapport au réseau électrique triphasé 30.

Le circuit PFC 20 est commandé par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC 20, il est connu, notamment du document d'art antérieur CN104811061, de mettre en œuvre un redresseur triphasé trois niveaux à trois interrupteurs, communément connu sous le nom de redresseur triphasé de Vienne, tel que décrit dans le document d'art antérieur EP94120245 et en figure 2.

Les documents US2017/279287, IDE P ET AL: "Opération of a three-phase/three-level-rectifier in wide range and single-phase applications" et WO2013/093287 font partie de l'état de l'art de la présente demande.

Le choix de cette topologie est en effet particulièrement avantageux du point de vue des performances pour la correction de facteur de puissance, en particulier pour les réseaux électriques triphasés, mais transposable aux réseaux électriques monophasés.

Dans un redresseur triphasé de Vienne 20, la source de tension d'entrée monophasée 30 est reliée par une inductance $L_a$, $L_b$, $L_c$ aux bras de commutation A, B, C du redresseur 20, chaque bras A, B, C étant pourvu d'une cellule d'interrupteurs de puissance respectivement Sa, Sb, Sc.

Les cellules d'interrupteurs de puissance Sa, Sb, Sc sont disposées chacune entre l'inductance $L_{a,b,c}$ et un point milieu O entre les deux tensions de sortie $V_{DCh}$ et $V_{DCl}$ du redresseur 20, correspondant respectivement à la tension sur un premier condensateur de sortie C1 connecté entre le point milieu O et une ligne d'alimentation positive H et à la tension sur un deuxième condensateur de sortie C2 connecté entre le point milieu O et une ligne d'alimentation négative L.

Généralement pour commander un tel redresseur de Vienne 20, on mesure les tensions et les courants ia, ib, ic en amont des inductances La, Lb, Lc, ainsi qu'en sortie du redresseur et on utilise des boucles de régulation permettant de générer des rapports cycliques nécessaires pour régler le temps de conduction moyen des interrupteurs Sa, Sb, Sc.

Une méthode connue pour appliquer les rapports cycliques déterminés dans le cadre d'une régulation monophasée est d'utiliser un seul bras parmi les trois bras du redresseur de Vienne et d'appliquer les rapports cycliques sur l'interrupteur haut ou bas du bras concerné en fonction du signe du courant.

Cependant, une telle méthode présente le défaut de déséquilibrer l'utilisation des composants électroniques du chargeur, car un seul bras est utilisé. De plus les variations involontaires de courant, dites *ripples* en anglais, sont relativement importantes ce qui impose un dimensionnement contraignant des bobines (*selfs*) d'entrée.

Aussi il existe le besoin d'une méthode d'application des rapports cycliques déterminés pour un redresseur de Vienne triphasé résolvant les problèmes précédents.

On propose un procédé de commande d'un chargeur d'accumulateurs électrique connecté à un réseau électrique alternatif monophasé, ledit chargeur d'accumulateurs comprend un étage de correction du facteur de puissance comportant un redresseur de Vienne formé de trois bras de pont s'étendant chacun entre deux bornes de sortie, chaque bras de pont étant associé à un interrupteur haut commandé et un interrupteur bas commandé montés en opposition l'un par rapport à l'autre,

ledit procédé comprenant une étape d'obtention d'une tension à réaliser, une étape de détermination de rapports cycliques adaptés pour l'asservissement des courants sinusoïdaux en entrée du chargeur et une étape d'application desdits rapports cyclique.

Ladite étape d'application des rapports cycliques comprend :

- une étape de sélection d'un premier bras d'application des rapports cycliques et d'un deuxième bras d'application des rapports cycliques parmi les trois bras de pont de redresseur de Vienne ; et
- au cours d'un même période électrique dudit réseau électrique l'application des rapports cycliques est réalisée :

     o par un bras d'application parmi les deux bras d'application, lorsque le courant est inférieur en valeur absolue à une valeur de seuil ; et
     o conjointement par les deux bras d'application lorsque le courant est supérieur en valeur absolue à ladite valeur de seuil.

Ainsi, on peut obtenir une utilisation équilibrée des composants électroniques du chargeur, en particulier du redresseur de Vienne, en alternant deux bras de commutation, tout en réduisant les variations involontaires de courant, dites *ripples* en anglais, ce qui permet d'obtenir un dimensionnement plus réduit des bobines (selfs) d'entrée, et donc de réduire leur volume ainsi que leur coût.

En outre on réduit les pertes par commutation, en appliquant les rapports cycliques avec un seul bras lorsque les valeurs de courant sont inférieures à une tension de seuil prédéterminée.

Avantageusement et de manière non limitative, ledit bras d'application parmi les deux bras d'application mettant en œuvre l'application des rapports cycliques, lorsque le courant est inférieur en valeur absolue à une valeur de seuil, est sélectionné de sorte à présenter une alternance entre le premier bras d'application et le deuxième bras d'application entre deux périodes électriques consécutives. Ainsi, on améliore encore l'équilibrage global de l'utilisation du redresseur de Vienne.

Avantageusement et de manière non limitative, lorsque l'application des rapports cycliques est réalisée par les deux bras d'application conjointement, un interrupteur commandé d'un premier bras d'application est ouvert lorsque le courant devient supérieur à la valeur limite, tandis qu'un interrupteur commandé du deuxième bras d'application est ouvert après un temps correspondant à la moitié de la valeur du rapport cyclique appliqué. Ainsi, on évite d'ouvrir simultanément les deux interrupteurs, ce qui assure un fonctionnement fiable du redresseur de Vienne et diminue les « ripples » sur le courant.

En particulier, lorsque la tension à réaliser est positive, l'interrupteur commandé du premier bras d'application ouvert correspond à l'interrupteur haut, tandis que l'interrupteur commandé du deuxième bras ouvert correspond à l'interrupteur bas. Ainsi, l'ouverture des interrupteurs commandés est directement fonction du signe de la tension à réaliser, ce qui permet d'obtenir un procédé relativement simple.

En particulier, lorsque la tension à réaliser est négative, l'interrupteur commandé du premier bras d'application ouvert correspond à l'interrupteur bas, tandis que l'interrupteur commandé du deuxième bras ouvert correspond à l'interrupteur haut. Ainsi, l'ouverture des interrupteurs commandés est directement fonction du signe de la tension à réaliser, ce qui permet d'obtenir un procédé relativement simple.

Avantageusement et de manière non limitative, ladite valeur de seuil est comprise entre 10A et 20A, par exemple 15A. Ainsi, on peut appliquer les rapports cycliques dans le cadre d'un chargeur monophasé de véhicule automobile.

L'invention concerne aussi un dispositif de commande d'un chargeur d'accumulateurs électrique connecté à un réseau électrique alternatif monophasé, ledit chargeur d'accumulateurs comprend un étage de correction du facteur de puissance comportant un redresseur de Vienne formé de trois bras de pont s'étendant chacun entre deux bornes de sortie, chaque bras de pont étant associé à un interrupteur haut commandé et un interrupteur bas commandé commandés montés en opposition l'un par rapport à l'autre, ledit dispositif comprenant des moyens de détermination de rapports cycliques adaptés pour l'asservissement des courants sinusoïdaux en entrée du chargeur et des moyens pour appliquer lesdits rapports cycliques.

Lesdits moyens pour appliquer lesdits rapports cycliques sont adaptés pour:

- sélectionner d'un premier bras d'application des rapports cycliques et d'un deuxième bras d'application des rapports cycliques parmi les trois bras de pont de redresseur de Vienne ; et
- au cours d'une même période électrique dudit réseau électrique, commander l'application des rapports cycliques :

     o par un bras d'application parmi les deux bras d'application, lorsque le courant est inférieur en valeur absolue à une valeur de seuil ; et
     o conjointement par les deux bras d'application lorsque le courant est supérieur en valeur absolue à ladite valeur de seuil.

L'invention concerne aussi un ensemble d'accumulation électrique comprenant un chargeur d'accumulateurs électrique connecté à un réseau électrique alternatif monophasé, ledit chargeur comprenant un étage de correction du facteur de puissance comportant un redresseur de Vienne formé de trois bras de pont s'étendant chacun entre deux bornes de sortie, chaque bras de pont étant associé à un interrupteur haut commandé et un interrupteur bas commandé montés en opposition l'un par rapport à l'autre, l'ensemble comprenant en outre un dispositif de commande tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est un schéma général d'un ensemble d'accumulation électrique depuis un réseau monophasé;
- la figure 2 est un vue d'un redresseur de Vienne connu de l'art antérieur;
- la figure 3 comprend trois graphiques a, b et c, représentant une séquence temporelle d'une stratégie de commutation à deux bras selon l'invention, au cours d'un période électrique ; et
- la figure 4 est une représentation schématique des commutations électriques des interrupteurs commandés du redresseur de Vienne, et une représentation du courant électrique d'entrée, selon un mode de réalisation de l'invention.

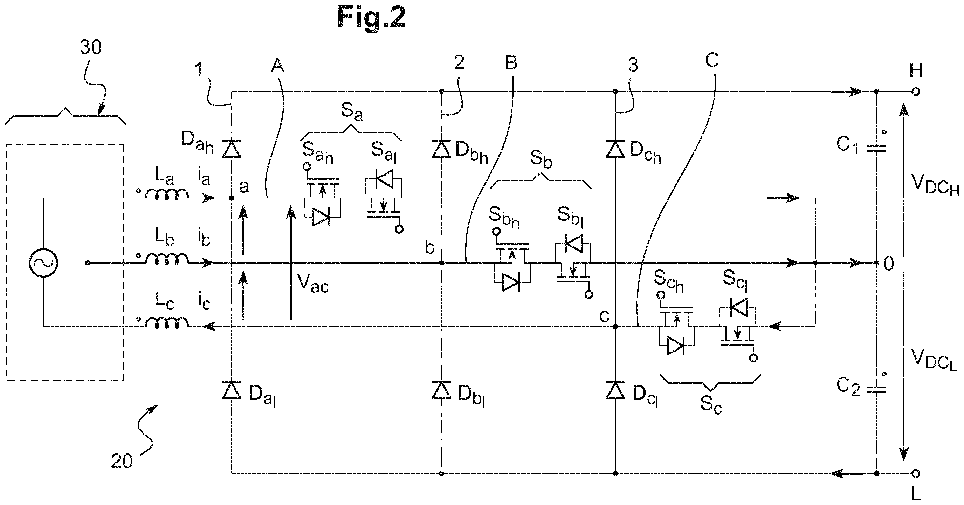

La figure 2 représente la structure d'un redresseur triphasé de Vienne 20 connu de l'art antérieur, tel qu'il est employé dans l'invention.

Le redresseur triphasé de Vienne 2 comprend trois connexions entrantes parallèles couplées chacune à l'alimentation électrique monophasée 30 par l'intermédiaire de bobines d'inductance en série La, Lb, Lc, et reliée chacune à une paire d'interrupteurs Sa, Sb, Sc formant un premier, un deuxième et un troisième bras de commutation du redresseur triphasé de Vienne.

Chaque paire d'interrupteurs Sa, Sb, Sc comprend un montage série en tête bêche constitué d'un premier interrupteur correspondant Sah, Sbh, Sch, qui est piloté quand un courant d'entrée correspondant $i_a$, $i_b$, $i_c$ est positif, et d'un second interrupteur correspondant Sal, Sbl, Scl qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que des transistors SiC-MOS (acronyme anglais pour Silicon Carbide-*Metal Oxide Semiconductor*), connectés en antiparallèle avec une diode. Ce type de semi-conducteurs est adapté pour des fréquences de découpage très élevées. Les interrupteurs Sah, Sbh, Sch sont également nommés interrupteurs haut et les interrupteurs Sal, Sbl, Scl, interrupteurs bas.

Le redresseur triphasé de Vienne 20 comprend aussi trois branches parallèles 1, 2 et 3, comportant chacune deux diodes Dah et Dal, Dbh et Dbl et Dch et Dcl, qui forment un pont triphasé à six diodes permettant un transfert unidirectionnel de l'énergie et de redresser le courant et la tension prélevés à partir du réseau d'alimentation électrique 30 triphasé.

Chaque entrée du redresseur triphasé de Vienne 20 est connectée, par une connexion entrante parallèle respective, à un point de connexion situé entre deux diodes d'une même branche 1, 2 et 3.

Les deux extrémités communes des branches 1, 2 et 3 constituent deux bornes de sorties H et L, respectivement positive H et négative L, du redresseur triphasé de Vienne 20, qui sont destinées à être couplées au dispositif DC-DC 12.

Les bras de commutation Sa, Sb, Sc de chaque phase sont par ailleurs connectés chacun respectivement entre le point de connexion a, b, c situé entre les deux diodes des première 1, deuxième 2 et troisième branches 3 et un point milieu O des tensions de sortie $V_{DCH}$ et $V_{DCL}$ du redresseur triphasé de Vienne 20, correspondant respectivement à la tension sur un condensateur de sortie C1 entre la borne de sortie positive H du redresseur triphasé et le point milieu O et à la tension sur un condensateur de sortie C2 entre le point milieu O et une borne de sortie négative L du redresseur triphasé 20.

La tension sur les condensateurs de sortie C1, C2 est asservie de façon indépendante par le convertisseur DC-DC du dispositif de charge connecté en sortie du redresseur triphasé de Vienne 20, selon la topologie globale illustré à la figure 1. Autrement dit, les tensions de sortie du redresseur triphasé de Vienne 20 sont commandées par le convertisseur DC-DC 12.

Le redresseur triphasé de Vienne 20 intercalé à l'entrée de l'alimentation du chargeur 10 assume le rôle de correction du facteur de puissance du chargeur. Un tel rôle permet d'empêcher les courants perturbateurs (harmoniques) produits par le chargeur, de circuler à travers l'impédance du réseau, située en amont du redresseur de Vienne 20.

Les bras de commutation Sa, Sb et Sc de chaque phase du réseau triphasé 30 sont contrôlés aux moyens de six signaux de commande PWM (d'après l'anglais « Pulse Width Modulation ») ayant un rapport cyclique variable à fréquence de découpage fixe égale à 140kHz individuellement réglé par des moyens de traitement de type FPGA par exemple (non représenté) pour des fréquences d'échantillonnage élevées.

Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur.

Une fois que la régulation émet une tension à réaliser Vac entre les bras A et C pour l'asservissement des courants sinusoïdaux en entrée du redresseur, les moyens de traitement permettent la détermination des rapports cycliques à appliquer.

L'application des rapports cycliques est alors commandée sur le redresseur de Vienne.

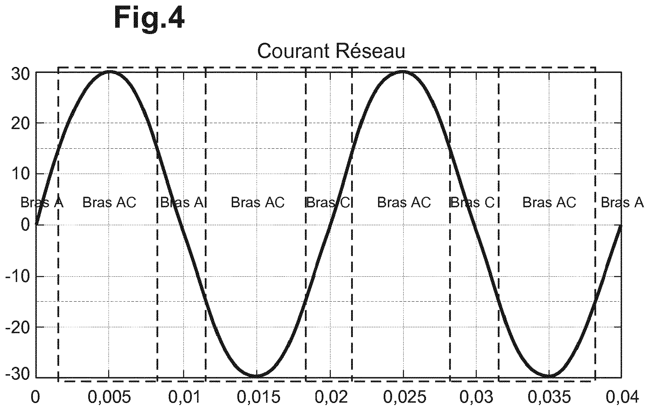

En référence à la figure 4, au cours d'une même période électrique, le procédé de commande applique les rapports cycliques en se basant sur la valeur du courant d'entrée $i_a$, pour partie en utilisant conjointement deux bras de commutation A,C lorsque le courant $i_a$ (en valeur absolue) est supérieur à une valeur seuil, stratégie de commande dite à deux bras, et pour partie en utilisant un seul bras de commutation A ou C, stratégie de commande dite à un bras.

Le procédé n'emploie cependant, pour l'application des rapports cycliques, que deux bras de commutation A, C, dits bras d'application des rapports cycliques, ou plus simplement bras d'application A ou C, parmi les trois bras de commutation A, B, C. En outre les bras de commutation A, C pouvant être employé pour la stratégie à un bras sont les même que ceux employés pour la stratégie à deux bras. Autrement dit, l'un des bras de commutation B du redresseur de Vienne n'est jamais sollicité pour l'application des rapports cycliques selon l'invention. Ceci tout simplement parce qu'une alimentation monophasé ne comporte que 2 connexions : une connexion à la phase et une connexion neutre.

En particulier, on emploie les bras de commutation A, C généralement reliés, dans le cadre d'une alimentation triphasée à la première et la troisième phase.

Ainsi, dans une étape préalable du procédé, on sélectionne les deux bras de commutation A et C employés par le procédé. S'il apparaît optimal ici d'employer les bras A et C, on pourrait toutefois envisager d'employer une autre combinaison de bras, comme les bras de commutation A et B ou B et C.

En outre, pour une même période électrique les stratégies à un bras du début de période et de fin de période utiliserons un même bras de commutation A ou C par les deux bras pouvant être employés. Cependant, pour deux périodes électriques consécutives, on alterne les bras A et C. Ainsi pour une première période électrique un premier bras est utilisé, puis pour la période suivante le deuxième bras est utilisé et pour la troisième période électrique le premier bras est de nouveau utilisé.

Aussi, l'état des interrupteurs Sbh, Sbl du bras de commutation B ne sont pas décrits par la suite, étant entendu qu'ils ne sont jamais commandés (c'est-à-dire qu'ils restent ouverts en position de repos) dans le procédé décrit.

En référence à la figure 4, dans le cadre de l'application des rapports cycliques selon la stratégie à un bras, lorsque le premier bras d'application est utilisé, en début de période électrique et en fin de période, lorsque le courant $i_a$ est inférieur, en valeur absolue, à une valeur de seuil de courant prédéterminée, par exemple une valeur de seuil comprise entre 10 et 20A, par exemple 15A, on ferme les 2 interrupteurs du bras C et :

- on hache avec l'interrupteur Sah si le courant $I_a$ est positif, selon les rapports cycliques déterminés, et
- avec l'interrupteur Sal si le courant $I_a$ est négatif.

Ainsi lorsque le courant $I_a$ est positif et que l'interrupteur Sah est fermé, les bobines $L_a$ et $L_c$ stockent l'énergie. Lorsque le courant $I_a$ est positif et que l'interrupteur Sah est ouvert, le courant passe dans la diode Dah, la capacité C1 et la branche de commutation comportant les interrupteurs Sch et Scl.

Lorsque le courant $I_a$ est négatif et que l'interrupteur Sal est fermé, les bobines $L_a$ et $L_c$ stockent l'énergie. Lorsque le courant $I_a$ est négatif et que l'interrupteur Sal est ouvert, le courant passe dans la branche de commutation comportant les interrupteurs Sch et Scl, la capacité C2 et la diode Dal.

De même pour la stratégie à un bras lorsque le deuxième bras d'application C est utilisé, on ferme les interrupteurs du premier bras d'application A et on hache avec les interrupteurs du deuxième bras d'application C selon le signe du courant $I_c$, soit l'opposé du courant $_{Ia}$ :

- on hache avec l'interrupteur Sch si le courant $I_c$ est positif, selon les rapports cycliques déterminés, et
- avec l'interrupteur Scl si le courant $I_c$ est négatif.

Ainsi lorsque le courant $I_c$ est positif et que l'interrupteur Sch est fermé, les bobines $L_a$ et $L_c$ stockent l'énergie. Lorsque le courant $I_c$ est positif et que l'interrupteur Sch est ouvert, le courant passe dans la diode Dch, la capacité C1 et la branche de commutation comportant les interrupteurs Sah et Sal.

Lorsque le courant $I_c$ est négatif et que l'interrupteur Scl est fermé, les bobines $L_a$ et $L_c$ stockent l'énergie. Lorsque le courant $I_c$ est négatif et que l'interrupteur Scl est ouvert, le courant passe dans la branche de commutation comportant les interrupteurs Sah et Sal, la capacité C2 et la diode Dcl.

Avec ce fonctionnement, les selfs sur les bras A et C subiront un hachage de tension à la fréquence de base de la PWM. Pour un courant Ia positif, c'est le DCDC Haute (DCDC High, non représentée) qui devra absorber la puissance, et le DCDC basse (DCDC Low, non représentée) dans le cas d'un courant Ia négatif, comme les montrent les figures suivantes selon ce mode de fonctionnement.

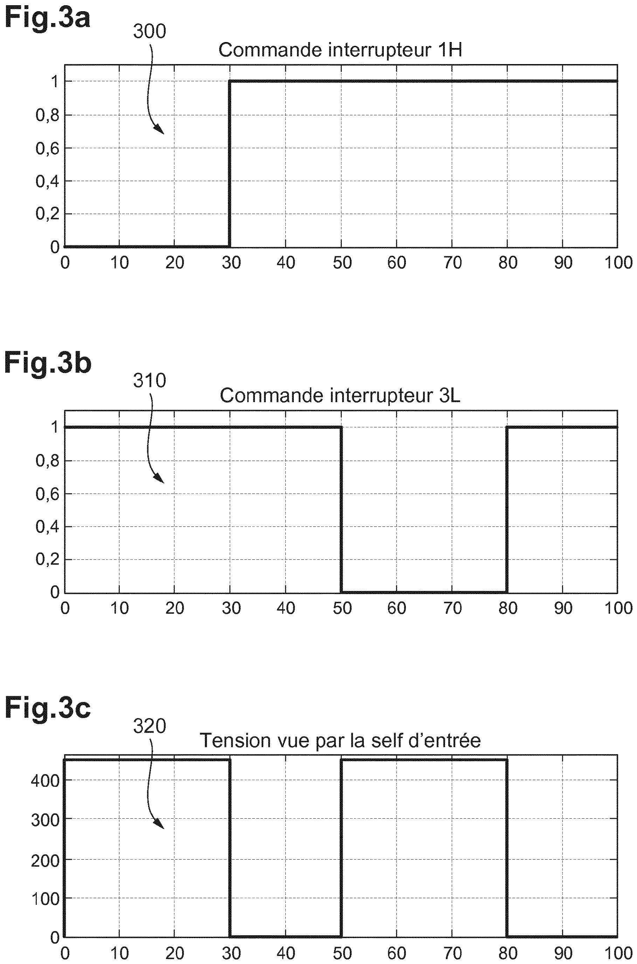

En référence à la figure 3, lorsque le courant d'entrée est supérieur, en valeur absolue, à la valeur de seuil de courant prédéterminée, pour équilibrer l'utilisation des bras d'application A et C, on met en œuvre la stratégie à deux bras, qui permet de réduire les variations de courant involontaires, dites *ripples de courant.*

Le procédé reçoit une tension à réaliser Vac entre les bras A et C, définie par la régulation, par exemple une tension positive, le rapport cyclique $\alpha$ cible correspond alors à :

$$\alpha = Vac/Vdc$$

avec Vac la tension à réaliser entre les bras A et C, et Vdc, la tension continue de sortie.

On ouvre 300 alors ouvrir l'interrupteur Sah pendant $\alpha/2$, Sah car la tension Vac est positive (Sal si la tension Vac était négative), et on ouvre 310 Scl pendant $\alpha/2$ également (Sch si la tension Vac était négative).

Pour ne pas avoir les 2 interrupteurs des deux bras d'applications Sah, Scl ou Sal, Sch ouverts au même moment, on décale l'ouverture 310 de l'interrupteur Scl d'une demi-période de la fréquence de hachage.

Comme le rapport cyclique $\alpha$ est au maximum égal à 1, on ouvre au maximum l'interrupteur Sah pendant $\alpha/2<0.5$, soit au maximum la première demi-période de PWM et de même pour l'interrupteur Scl. On s'assure ainsi de ne pas ouvrir les 2 interrupteurs en même temps.

Selon cette stratégie à deux bras, les selfs d'entrée La, Lc seront soumises 320 à un hachage à une fréquence double de la fréquence de la modulation de largeur de phase (PWM) de chaque bras car elles recevront deux états de tensions dans la première demi-période (hachage de l'interrupteur Sah) et 2 états dans la seconde demi-période (hachage de l'interrupteur Scl). De plus, le courant est bien partagé entre les 2 DCDC.

L'utilisation de la méthode à bras unique est réduite au juste nécessaire grâce au seuil prédéterminé sur le courant $i_a$ pour décider de son activation. On dégrade ainsi au minimum le rendement du redresseur de courant tout en permettant de faire un dimensionnement des selfs au plus juste en limitant les *ripples* de courant dans les zones critiques où celui-ci est maximal.

## Revendications

1. Procédé de commande d'un chargeur (10) d'accumulateurs électrique connecté à un réseau électrique alternatif monophasé (30), ledit chargeur (10) d'accumulateurs comprend un étage de correction du facteur de puissance (20) comportant un redresseur de Vienne formé de trois bras de pont (1, 2, 3) s'étendant chacun entre deux bornes de sortie (H,L), chaque bras de pont (1, 2, 3) étant associé à un interrupteur haut commandé (Sah, Sbh, Sch) et un interrupteur bas commandé (Sal, Sbl, Scl) montés en opposition l'un par rapport à l'autre,
ledit procédé comprenant une étape d'obtention d'une tension à réaliser ($V_{ac}$), une étape de détermination de rapports cycliques adaptés pour l'asservissement des courants sinusoïdaux en entrée du chargeur (10) et une étape d'application desdits rapports cycliques ;
**caractérisé en ce que** ladite étape d'application des rapports cycliques comprend :

   - une étape de sélection d'un premier bras d'application des rapports cycliques et d'un deuxième bras d'application des rapports cycliques parmi les trois bras de pont de redresseur de Vienne ; et
   - au cours d'une même période électrique dudit réseau électrique l'application des rapports cycliques est réalisée :

      o par un bras d'application (A, C) parmi les deux bras d'application (A, C), lorsque le courant ($i_a$, $i_c$) est inférieur en valeur absolue à une valeur de seuil ; et
      o conjointement par les deux bras d'application (A, C) lorsque le courant ($i_a$, $i_c$) est supérieur en valeur absolue à ladite valeur de seuil.

2. Procédé selon la revendication 1 **caractérisé en ce que** ledit bras d'application (A, C) mettant en œuvre l'application des rapports cycliques, lorsque le courant ($i_a$, $i_c$) est inférieur en valeur absolue à une valeur de seuil, est sélectionné de sorte à présenter une alternance entre le premier bras d'application (A) et le deuxième bras d'application (C) entre deux périodes électriques consécutives.

3. Procédé selon la revendication 1 ou 2, **caractérisé en ce que** lorsque l'application des rapports cycliques est réalisée par les deux bras d'application (A, C) conjointement, un interrupteur commandé (Sah, Sal) d'un premier bras d'application (A) est ouvert lorsque le courant ($i_a$, $i_c$) devient supérieur à la valeur limite, tandis qu'un interrupteur commandé (Scl, Sch) du deuxième bras d'application (C) est ouvert après un temps correspondant à la moitié de la valeur du rapport cyclique appliqué.

4. Procédé selon la revendication 3, **caractérisé en ce que** lorsque la tension (Vac) à réaliser est positive, l'interrupteur commandé du premier bras d'application (A) ouvert correspond à l'interrupteur haut (Sah), tandis que l'interrupteur commandé du deuxième bras (C) ouvert correspond à l'interrupteur bas (Scl).

5. Procédé selon la revendication 3 ou 4, **caractérisé en ce que** lorsque la tension à réaliser (Vac) est négative, l'interrupteur commandé du premier bras d'application (A) ouvert correspond à l'interrupteur bas (Sal), tandis que l'interrupteur commandé du deuxième bras (C) ouvert correspond à l'interrupteur haut (Sch).

6. Procédé selon l'une quelconque des revendications 1 à 5, **caractérisé en ce que** ladite valeur de seuil est comprise entre 10A et 20A, par exemple 15A.

7. Dispositif de commande d'un chargeur (10) d'accumulateurs électrique connecté à un réseau électrique alternatif monophasé (30), ledit chargeur (10) d'accumulateurs comprend un étage de correction du facteur de puissance (20) comportant un redresseur de Vienne formé de trois bras de pont (1, 2, 3) s'étendant chacun entre deux bornes de sortie (H,L), chaque bras de pont (1, 2, 3) étant associé à un interrupteur haut commandé (Sah, Sbh, Sch) et un interrupteur bas commandé (Sal, Sbl, Scl) montés en opposition l'un par rapport à l'autre,

ledit dispositif comprenant des moyens de détermination de rapports cycliques adaptés pour l'asservissement des courants sinusoïdaux en entrée du chargeur (1) des moyens de réception d'une tension de régulation ($V_{AC}$) et des moyens pour appliquer lesdits rapports cycliques ;

**caractérisé en ce que** ledits moyens pour appliquer lesdits rapports cycliques sont adaptés pour:

- sélectionner un premier bras d'application (A) des rapports cycliques et un deuxième bras d'application (C) des rapports cycliques parmi les trois bras de pont (A,B,C) du redresseur de Vienne ; et
- au cours d'un même période électrique dudit réseau électrique, commander l'application des rapports cycliques :

o par un bras d'application (A, C) parmi les deux bras d'application (A, C), lorsque le courant ($i_a$, $i_c$) est inférieur en valeur absolue à une valeur de seuil ; et
o conjointement par les deux bras d'application (A, C) lorsque le courant ($i_a$, $i_c$) est supérieur en valeur absolue à ladite valeur de seuil.

8. Ensemble d'accumulation électrique comprenant un chargeur (10) d'accumulateurs électrique connecté à un réseau électrique alternatif monophasé (30), ledit chargeur (10) comprenant un étage de correction du facteur de puissance (20) comportant un redresseur de Vienne formé de trois bras de pont (1, 2, 3) s'étendant chacun entre deux bornes de sortie (H,L), chaque bras de pont (1, 2, 3) étant associé à un interrupteur haut commandé (Sah, Sbh, Sch) et un interrupteur bas commandé (Sal, Sbl, Scl) commandés montés en opposition l'un par rapport à l'autre, l'ensemble comprenant en outre un dispositif de commande selon la revendication 7.

**Patentansprüche**

1. Verfahren zur Steuerung eines elektrischen Ladegeräts (10) für Akkumulatoren, das mit einem elektrischen Einphasenwechselstromnetz (30) verbunden ist, wobei das Ladegerät (10) für Akkumulatoren eine Stufe zur Korrektur des Leistungsfaktors (20) beinhaltet, die einen Vienna-Gleichrichter umfasst, der durch drei Brückenarme (1, 2, 3) gebildet ist, die sich jeweils zwischen zwei Ausgangsklemmen (H, L) erstrecken, wobei jeder Brückenarm (1, 2, 3) mit einem gesteuerten High-Schalter (Sah, Sbh, Sch) und einem gesteuerten Low-Schalter (Sal, Sbl, Scl) assoziiert ist, die zueinander entgegengesetzt angeordnet sind,

wobei das Verfahren einen Schritt des Erhaltens einer zu realisierenden Spannung ($V_{ac}$), einen Schritt des Bestimmens von Tastgraden, die für die Regelung der Sinusströme am Eingang des Ladegeräts (10) angepasst sind, und einen Schritt des Anwendens der Tastgrade beinhaltet; **dadurch gekennzeichnet, dass** der Schritt des Anwendens der Tastgrade Folgendes beinhaltet:

- einen Schritt des Auswählens eines ersten Arms zur Anwendung der Tastgrade und eines zweiten Arms zur Anwendung der Tastgrade aus den drei Brückenarmen des Vienna-Gleichrichters; und
- wobei während einer gleichen elektrischen Periode des elektrischen Netzes das Anwenden der Tastgrade realisiert wird:

o durch einen Anwendungsarm (A, C) der zwei Anwendungsarme (A, C), wenn der Strom ($i_a$, $i_c$) im Absolutwert kleiner als ein Schwellenwert ist; und
o durch die zwei Anwendungsarme (A, C) gemeinsam, wenn der Strom ($i_a$, $i_c$) im Absolutwert größer als der Schwellenwert ist.

2. Verfahren nach Anspruch 1, **dadurch gekennzeichnet, dass** der Anwendungsarm (A, C), der das Anwenden der Tastgrade umsetzt, wenn der Strom ($i_a$, $i_c$) im Absolutwert kleiner als ein Schwellenwert ist, so ausgewählt wird, dass zwischen zwei aufeinanderfolgenden elektrischen Perioden ein Wechsel zwischen dem ersten Anwendungsarm (A) und dem zweiten Anwendungsarm (C) erfolgt.

3. Verfahren nach Anspruch 1 oder 2, **dadurch gekennzeichnet, dass**, wenn das Anwenden der Tastgrade durch die zwei Anwendungsarme (A, C) gemeinsam realisiert wird, ein gesteuerter Schalter (Sah, Sal) eines ersten Anwendungsarms (A) geöffnet wird, wenn der Strom ($i_a$, $i_c$) größer als der Grenzwert wird, während ein gesteuerter Schalter (Scl, Sch) des zweiten Anwendungsarms (C) nach einer Zeit geöffnet wird, die der Hälfte des Werts des angewendeten Tastgrads entspricht.

4. Verfahren nach Anspruch 3, **dadurch gekennzeichnet, dass**, wenn die zu realisierende Spannung (Vac) positiv ist, der geöffnete gesteuerte Schalter des ersten Anwendungsarms (A) dem High-Schalter (Sah) entspricht, während der geöffnete gesteuerte Schalter des zweiten Arms (C) dem Low-Schalter (Scl) entspricht.

5. Verfahren nach Anspruch 3 oder 4, **dadurch gekennzeichnet, dass**, wenn die zu realisierende Spannung (Vac) negativ ist, der geöffnete gesteuerte Schalter des ersten Anwendungsarms (A) dem Low-Schalter (Sal) entspricht, während der geöffnete gesteuerte Schalter des zweiten Arms (C) dem High-Schalter (Sch) entspricht.

6. Verfahren nach einem der Ansprüche 1 bis 5, **dadurch gekennzeichnet, dass** der Schwellenwert zwischen 10 A und 20 A liegt, zum Beispiel 15 A beträgt.

7. Vorrichtung zur Steuerung eines elektrischen Ladegeräts (10) für Akkumulatoren, das mit einem elektrischen Einphasenwechselstromnetz (30) verbunden ist, wobei das Ladegerät (10) für Akkumulatoren eine Stufe zur Korrektur des Leistungsfaktors (20) beinhaltet, die einen Vienna-Gleichrichter umfasst, der durch drei Brückenarme (1, 2, 3) gebildet ist, die sich jeweils zwischen zwei Ausgangsklemmen (H, L) erstrecken, wobei jeder Brückenarm (1, 2, 3) mit einem gesteuerten High-Schalter (Sah, Sbh, Sch) und einem gesteuerte Low-Schalter (Sal, Sbl, Scl) assoziiert ist, die zueinander entgegengesetzt angeordnet sind,

wobei die Vorrichtung Mittel zum Bestimmen von Tastgraden, die für die Regelung der Sinusströme am Eingang des Ladegeräts (1) angepasst sind, Mittel zum Empfangen einer Regelungsspannung ($V_{AC}$) und Mittel zum Anwenden der Tastgrade beinhaltet;

**dadurch gekennzeichnet, dass** die Mittel zum Anwenden der Tastgrade für Folgendes angepasst sind:

- Auswählen eines ersten Arms (A) zum Anwenden der Tastgrade und eines zweiten Arms (C) zum Anwenden der Tastgrade aus den drei Brückenarmen (A, B, C) des Vienna-Gleichrichters; und
- während einer gleichen elektrischen Periode des elektrischen Netzes, Steuern des Anwendens der Tastgrade:

o durch einen Anwendungsarm (A, C) der zwei Anwendungsarme (A, C), wenn der Strom ($i_a$, $i_c$) im Absolutwert kleiner als ein Schwellenwert ist; und
o durch die zwei Anwendungsarme (A, C) gemeinsam, wenn der Strom ($i_a$, $i_c$) im Absolutwert größer als der Schwellenwert ist.

8. Elektrische Akkumulierungseinheit, die ein elektrisches Ladegerät (10) für Akkumulatoren, das mit einem elektrischen Einphasenwechselstromnetz (30) verbunden ist, beinhaltet, wobei das Ladegerät (10) eine Stufe zur Korrektur des Leistungsfaktors (20) beinhaltet, die einen Vienna-Gleichrichter umfasst, der durch drei Brückenarme (1, 2, 3) gebildet ist, die sich jeweils zwischen zwei Ausgangsklemmen (H, L) erstrecken, wobei jeder Brückenarm (1, 2, 3) mit einem gesteuerten High-Schalter (Sah, Sbh, Sch) und einem gesteuerten Low-Schalter (Sal, Sbl, Scl) assoziiert ist, die zueinander entgegengesetzt angeordnet gesteuert werden, wobei die Einheit ferner eine Steuervorrichtung nach Anspruch 7 beinhaltet.

## Claims

1. Method for controlling an electric battery charger (10) connected to a single-phase AC electricity grid (30), said battery charger (10) comprising a power factor correction stage (20) having a Vienna rectifier formed of three bridge arms (1, 2, 3) each extending between two output terminals (H, L), each bridge arm (1, 2, 3) being associated with a controlled high-side switch (Sah, Sbh, Sch) and a controlled low-side switch (Sal, Sbl, Scl) that are connected in opposition to one another,

said method comprising a step of achieving a voltage to be produced ($V_{ac}$), a step of determining duty cycles suitable for slaving the sinusoidal currents at the input of the charger (10) and a step of applying said duty cycles; **characterized in that** said step of applying the duty cycles comprises:

- a step of selecting a first arm for applying the duty cycles and a second arm for applying the duty cycles from among the three Vienna rectifier bridge arms; and
- during one and the same electrical period of said electricity grid, applying the duty cycles:

o using one application arm (A, C) from among the two application arms (A, C) when the current ($i_a$, $i_c$) is lower, in terms of absolute value, than a threshold value; and
o jointly using the two application arms (A, C) when the current ($i_a$, $i_c$) is greater, in terms of absolute value, than said threshold value.

2. Method according to Claim 1, **characterized in that** said application arm (A, C) applying the duty cycles, when the current ($i_a$, $i_c$) is lower, in terms of absolute value, than a threshold value, is selected so as to alternate between the first application arm (A) and the second application arm (C) between two consecutive electrical periods.

**3.** Method according to Claim 1 or 2, **characterized in that**, when the duty cycles are applied jointly by the two application arms (A, C), a controlled switch (Sah, Sal) of a first application arm (A) is opened when the current ($i_a$, $i_c$) becomes greater than the limit value, whereas a controlled switch (Scl, Sch) of the second application arm (C) is opened after a time corresponding to half the value of the duty cycle that is applied.

**4.** Method according to Claim 3, **characterized in that**, when the voltage (Vac) to be produced is positive, the controlled open switch of the first application arm (A) corresponds to the high-side switch (Sah), whereas the controlled open switch of the second arm (C) corresponds to the low-side switch (Scl).

**5.** Method according to Claim 3 or 4, **characterized in that**, when the voltage (Vac) to be produced is negative, the controlled open switch of the first application arm (A) corresponds to the low-side switch (Sal), whereas the controlled open switch of the second arm (C) corresponds to the high-side switch (Sch).

**6.** Method according to any one of Claims 1 to 5, **characterized in that** said threshold value is between 10 A and 20 A, for example 15 A.

**7.** Device for controlling an electric battery charger (10) connected to a single-phase AC electricity grid (30), said battery charger (10) comprising a power factor correction stage (20) having a Vienna rectifier formed of three bridge arms (1, 2, 3) each extending between two output terminals (H, L), each bridge arm (1, 2, 3) being associated with a controlled high-side switch (Sah, Sbh, Sch) and a controlled low-side switch (Sal, Sbl, Scl) that are connected in opposition to one another, said device comprising means for determining duty cycles suitable for slaving the sinusoidal currents at the input of the charger (1), means for receiving a control voltage ($V_{AC}$) and means for applying said duty cycles; **characterized in that** said means for applying said duty cycles are designed to:

- select a first arm (A) for applying the duty cycles and a second arm (C) for applying the duty cycles from among the three bridge arms (A, B, C) of the Vienna rectifier; and
- during one and the same electrical period of said electricity grid, control the application of the duty cycles:

o using one application arm (A, C) from among the two application arms (A, C) when the current ($i_a$, $i_c$) is lower, in terms of absolute value, than a threshold value; and
o jointly using the two application arms (A, C) when the current ($i_a$, $i_c$) is greater, in terms of absolute value, than said threshold value.

**8.** Electrical accumulation assembly comprising an electric battery charger (10) connected to a single-phase AC electricity grid (30), said charger (10) comprising a power factor correction stage (20) having a Vienna rectifier formed of three bridge arms (1, 2, 3) each extending between two output terminals (H, L), each bridge arm (1, 2, 3) being associated with a controlled high-side switch (Sah, Sbh, Sch) and a controlled low-side switch (Sal, Sbl, Scl) that are controlled and connected in opposition to one another, the assembly furthermore comprising a control device according to Claim 7.

Fig.1

Réseau électrique — 30

Impédance de ligne — 40

Chargeur — 10

Filtre d'entrée — 13

PFC — 20

DC/DC — 12

Batterie 400V

**Fig.2**

EP 3 707 800 B1

# Fig.3a

300

Commande interrupteur 1H

# Fig.3b

310

Commande interrupteur 3L

# Fig.3c

320

Tension vue par la self d'entrée

# Fig.4

## Courant Réseau

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104811061
- EP 94120245 A
- US 2017279287 A, IDE P
- WO 2013093287 A